# FASCICULE DE BREVET EUROPEEN

(11) **EP 0 569 292 B1**
(45) Date de publication et mention de la délivrance du brevet: **24.07.1996**
(21) Numéro de dépôt: 93401154.5
(22) Date de dépôt: 05.05.1993
(51) Int. Cl.: B60B 33/02

(54) **Roulette pivotante**
Lenkrolle
Castor wheel

(30) Priorité: 07.05.1992 FR 9205665
(43) Date de publication de la demande: 10.11.1993
(73) Titulaire: GUITEL-ETIENNE MOBILOR, F-93310 Le Pré Saint-Gervais (FR)
(72) Inventeur: Roy, Jean-Pierre, F-93700 Drancy (FR); Hrabina, Jean, F-93600 Aulnay (FR); Bertrand, Claude, F-93600 Aulnay (FR)
(74) Mandataire: Hasenrader, Hubert

(56) Documents cités:
- EP-A- 0 424 234
- DE-A- 3 226 926
- DE-A- 3 525 443

## Description

La présente invention concerne une roulette pivotante pour chariot ou autre engin mobile, du type comportant une roue dont le pivotement autour d'un axe vertical est susceptible d'être bloqué ou débloqué par la rotation de celle-ci dans un sens ou dans l'autre, un palier de support présentant au moins une cuvette annulaire qui, par sa partie centrale, est fixée rigidement sur l'extrémité inférieure de l'axe vertical de pivotement, une chape de support présentant au moins une joue latérale dont l'extrémité inférieure porte l'axe horizontal de la roue et présentant également une calotte annulaire supérieure disposée autour de l'extrémité inférieure de l'axe vertical de pivotement, raccordée à l'extrémité supérieure de ladite joue et coopérant avec les organes de roulement dudit palier, et des moyens de verrouillage de la chape par rapport à l'axe vertical de pivotement,
Lesdits moyens de verrouillage comprenant un double levier de commande disposé dans l'espace compris entre le palier de support et la bande de roulement de la roue et articulé sur la chape à l'aide d'un axe horizontal, parallèle à l'axe de la roue,
Un organe de frottement monté à l'extrémité inférieure dudit levier de commande et appliqué en permanence élastiquement contre la bande de roulement de ladite roue, ledit organe de frottement étant susceptible de provoquer le pivotement dudit levier de commande vers l'une de ses positions extrêmes dans l'une desquelles la chape de support est immobilisée en rotation par rapport à l'axe vertical de pivotement et dans l'autre desquelles ladite chape est libre en rotation par rapport audit axe vertical,
Un premier organe de verrouillage solidaire de l'extrémité supérieure dudit levier de commande,
Un deuxième organe de verrouillage susceptible de coopérer avec ledit premier organe de verrouillage en vue d'immobiliser la chape de support sur son axe vertical de pivotement et constitué d'une échancrure ménagée dans la cuvette annulaire.

Une telle roulette pivotant est par exemple connue par la demande de brevet européen publiée sous le numéro 0 424 234. Dans ce document, l'organe de frottement est constitué d'un piston creux obturé à son extrémité inférieure par une calotte sphérique qui frotte contre la bande de roulement de la roue. Ce piston creux est généralement réalisé en métal. Il a été constaté une usure rapide de la calotte sphérique par suite de l'abrasion provoquée par les gravillons ou autres saletés qui s'accumulent sur la bande de roulement.

Le but de la présente invention est de proposer une roulette pivotante du type mentionné ci-dessus, dans laquelle il soit possible de remplacer l'organe de frottement sans démonter les moyens de verrouillage.

L'organe de frottement est réalisé dans un materiau resistant à l'abrasion due aux saletés accumulées sur la bande de roulement et le double levier de commande comporte un étrier articulé sur l'axe de pivotement dudit double levier de commande et un organe de support sur lequel l'organe de frottement est monté, ledit organe de support étant fixé sur ledit axe de pivotement par des premiers moyens de fixation qui permettent son pivotement et étant fixé sur ledit étrier par des deuxièmes moyens de fixation.

L'organe de support est réalisé en un matériau élastique et les premiers moyens de fixation comportent une rainure, ménagée dans la paroi supérieure dudit organe de support, dans laquelle loge l'axe de pivotement du double levier de commande.

L'étrier présente une plaquette de verrouillage qui s'étend vers la bande de roulement de la roue, et les deuxièmes moyens de fixation comportent au moins un crochet formé sur l'organe de support et coopérant avec ladite plaquette de verrouillage.

D'autres avantages et caractéristiques de l'invention ressortiront à la lecture de la description suivante d'un mode de réalisation, description faite en référence aux dessins annexés sur lesquels
la figure 1 est une vue en élévation d'une coupe verticale à travers la roue pivotante et son palier de support, cette roue pivotante comportant les moyens de verrouillage de l'invention,
la figure 2 est une vue en élévation de la même roue pivotante dans laquelle l'organe de support est basculé pour permettre le changement de l'organe de frottement,

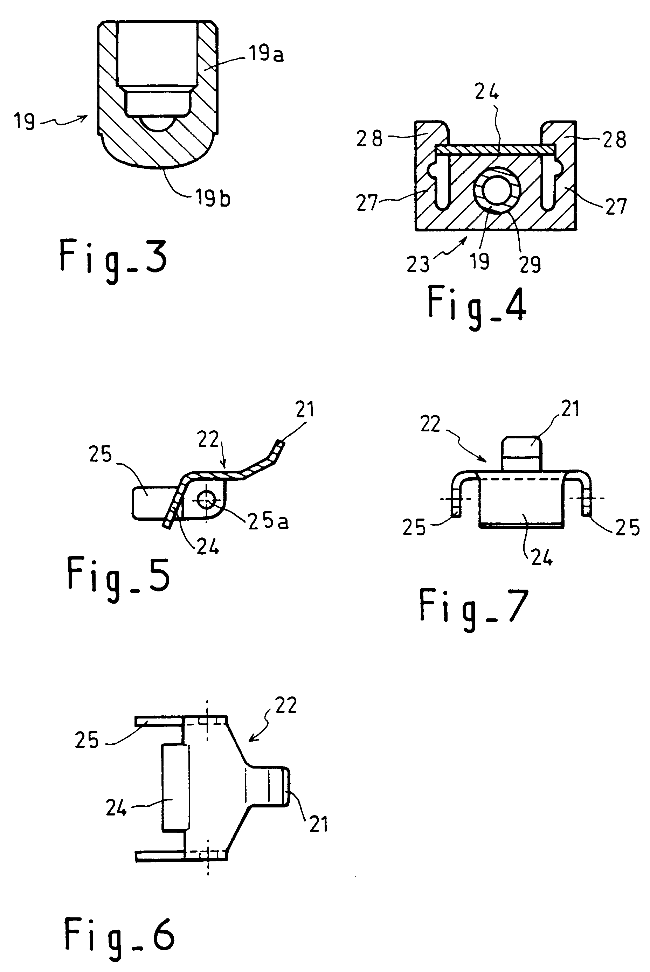

la figure 3 est une coupe à grande échelle de l'organe de frottement,
la figure 4 est une coupe, selon la ligne IV IV de la figure 1, de l'organe de support,
la figure 5 est une coupe verticale de l'étrier du double levier de commande,
la figure 6 est une vue de dessus de l'étrier de la figure 5 et,
la figure 7 est une vue frontale de l'étrier de la figure 5.

Tel que représenté sur les dessins annexés, un chariot ou autre plateforme mobile, non représenté, comporte une roue 2 qui est susceptible de pouvoir pivoter autour d'un axe vertical de pivotement 3 et d'être bloqué ou débloqué par la rotation de ladite roue 2 dans un sens ou dans l'autre. La roue 2 comporte un axe de rotation horizontal 4 dont les extrémités sont portées par au moins une joue latérale, et de préférence deux joues latérales 5, d'une chape 6 dont l'extrémité supérieure ayant la forme d'une calotte annulaire 7 est montée par l'intermédiaire d'un palier de support 8 sur l'extrémité inférieure de l'axe vertical de pivotement 3.

On remarquera que l'axe vertical de pivotement 3 est latéralement décalé par rapport au plan vertical passant par l'axe horizontal 4 de la roue.

Comme on peut le voir sur les dessins, le palier de support 8 comprend une première cuvette annulaire 9 et une deuxième cuvette annulaire 10 fixée comme la première, rigidement sur l'extrémité inférieure de l'axe vertical 3. Les deux cuvettes 9 et 10 sont ouvertes vers le bas. La première cuvette 9 est disposée au-dessus de la deuxième cuvette 10 et présente une jupe extérieure en forme de cloche 9a, à laquelle se raccorde à la partie supérieure, un fond annulaire retourné vers le bas 9b qui, dans la zone d'ouverture intérieure repose sur le fond annulaire 10a de la cuvette inférieure 10. Les deux cuvettes 9, 10 sont fixées sur l'axe vertical 3 et sont enserrées par leurs bords intérieurs entre deux épaulements annulaires 3a, 3b de l'axe vertical 3. A son extrémité inférieure, cette cuvette inférieure 10 possède un rebord annulaire 10 b qui, par sa face supérieure, sert de piste de roulement à une première série de billes de roulement ou organes analogues 11 sur laquelle prend appui la calotte annulaire 7 de la chape de support 6. Dans la zone de jonction annulaire entre la cloche 9a et le fond annulaire 9b, la cuvette supérieure 9 délimite une piste de roulement en forme de gorge 12 dans laquelle est logée une deuxième série de billes de roulement 13 reposant sur la face supérieure de la calotte annulaire 7. La cuvette extérieure 9 entoure et recouvre la calotte annulaire 7 et la cuvette inférieure 10.

La roulette pivotante 1 comporte également des moyens de verrouillage 16 de la chape de support 6.

Ces moyens de verrouillage 16 comprennent un double levier de commande 17 logcant dans l'espace compris entre le palier de support 8 et la bande de roulement 2a, et articulé sur la chape de support 6 à l'aide d'un axe horizontal 18 parallèle à l'axe 4 de la roue 2. Ces moyens de verrouillage 16 comprennent, en outre, un organe de frottement 19 prévu à l'extrémité inférieure du levier de commande 17 et appliqué en permanence et élastiquement contre la bande de roulement 2a de la roue 2. Cet organe de frottement 19 est susceptible de provoquer le pivotement du double levier 17 vers l'une de ses positions extrêmes dans l'une desquelles la chape de support 6 est immobilisée par rapport à l'axe vertical 3 et dans l'autre desquelles ladite chape 6 est libre en rotation par rapport audit axe vertical 3.

Les moyens de verrouillage 16 comprennent également un premier organe de verrouillage 21 solidaire de l'extrémité supérieure du levier de commande 17 et un deuxième organe de verrouillage 20 qui est prévu sur un élément immobile en rotation par rapport à l'axe vertical 3, par exemple la cuvette fixe extérieure 9 du palier 8. Ce deuxième organe de verrouillage 20 est susceptible de coopérer avec le premier organe de verrouillage 21 en vue d'immobiliser la chape de support 6 sur son axe vertical de pivotement 3. Le deuxième organe de verrouillage 20 est constitué par une échancrure de verrouillage ouverte vers le bas en direction du premier organe de verrouillage 21 et susceptible de recevoir sans jeu latéral notable le premier organe de verrouillage 21.

La calotte annulaire 7 comporte également une encoche 20a dans laquelle se déplace l'extrémité supérieure du levier de commande 17 en cas de pivotement de ce dernier. Cette encoche 20a guide latéralement le premier organe de verrouillage 21 dans ses déplacements verticaux. En cas de bloquage du pivotement de la roue 2 autour de l'axe vertical 3, l'encoche 20a de la calotte 7 est en regard de l'échancrure 20 de la cuvette 9. La proximité de l'encoche 20a et de l'échancrure 20 permet alors au système de blocage de supporter un couple important sur l'axe vertical 3 lorsque le mécanisme est en position bloquée.

Le levier de commande 17 est constitué de deux éléments : un étrier 22 et un organe de support 23 de l'organe de frottement 19.

L'étrier 22 est formé par découpe et pliage d'une plaque métallique. Il comporte essentiellement à son extrémité supérieure le premier organe de verrouillage 21 et à son extrémité inférieure, une plaquette de verrouillage 24 parallèle à l'axe de pivotement 18 et s'étendant vers la bande de roulement 2a de la roue 2, et, sur ses côtés latéraux, deux plaques verticales 25, s'étendant vers le bas et munies de trous 25a pour le passage de l'axe de pivotement 18. Ces plaques 25 viennent buter contre la face inférieure de la cuvette 10 lorsque le premier organe de verrouillage 21 ne coopère pas avec le deuxième organe de verrouillage 20.

L'organe de support 23 est disposé sous l'axe du pivotement 18. Il est réalisé dans un matériau élastique. Il comporte dans sa paroi supérieure une rainure 26 de forme circulaire dans laquelle loge l'axe de pivotement 18. Cette rainure 26 débouche sur la face supérieure de l'organe de support 23 par une ouverture ayant une largeur inférieure au diamètre de l'axe de pivotement 18.

Il comporte également sur ses faces latérales deux bras 27 qui s'étendent vers la plaquette de verrouillage 24 de l'étrier 22 et qui présentent à leurs extrémités des crochets 28 destinés à la fixation de l'organe de support 23 sur la plaquette de verrouillage 24 par encliquetage.

Les plaques 25 sont suffisamment écartées de la plaquette 24 pour permettre le passage des bras 27.

L'organe de frottement 19 est constitué par un piston creux 19a qui est guidé, de façon à pouvoir coulisser axialement, dans un logement 29 de section transversale appropriée, par exemple circulaire, ménagé coaxialement dans l'organe de support 23 de façon à être ouvert vers le bas. Le piston creux 19a est obturé à son extrémité inférieure qui dépasse du logement 29 par une calotte sphérique 19b qui frotte contre la bande de roulement 2a de la roue 2. Un ressort de rappel 30 est incorporé dans l'organe de support 23 et sollicite l'organe de frottement 19 contre la bande de roulement 2a. Ce ressort de rappel 30 est disposé partiellement à l'intérieur du piston creux 19a et partiellement à l'extérieur de celui-ci dans le logement 29 de l'organe de support 23.

Pour éviter l'usure par abrasion de l'organe de frottement 19 par suite des gravillons ou saletés qui s'accumulent sur la bande de roulement 2a, l'organe de frottement 19 est réalisé en un matériau non abradable et de préférence en céramique.

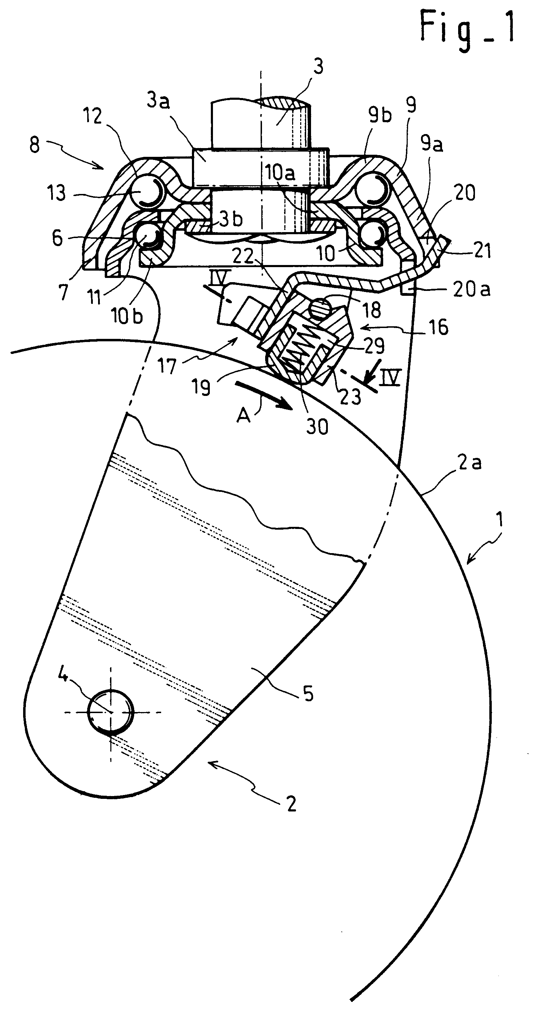

Le fonctionnement des moyens de verrouillage 16 se comprend aisément. Lorsque la roue tourne dans le sens de la flêche A (voir figure 1), le levier de commande 17 bascule dans le sens inverse des aiguilles d'une montre et le premier organe de verrouillage 21 est en appui contre le rebord inférieur de la cuvette 9 et pénètre dans l'échancrure 20 si celle-ci est située du côté opposé à l'axe 4 de la roue par rapport à l'axe vertical 3. Lorsque la roue 2 tourne dans l'autre-sens, le levier de commande 17 bascule dans le sens des aiguilles d'une montre, les plaques latérales 25 de l'étrier 22 viennent buter contre la paroi inférieure de la cuvette 10, et la roue 23 est libre en rotation autour de l'axe vertical 3. A noter que dans cette position, les plaques latérales 25 enlèvent les saletés accumulées contre la cuvette 10.

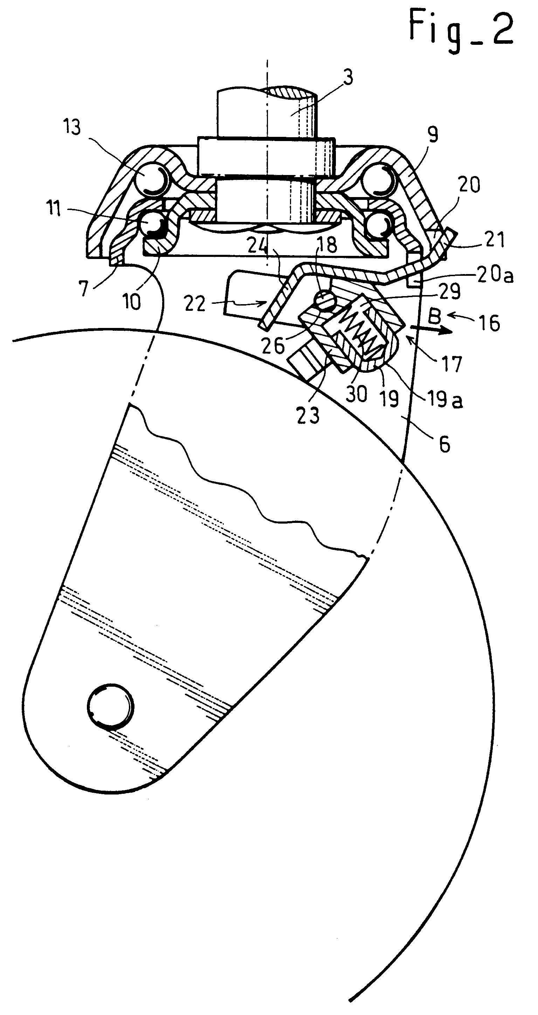

Comme on le voit sur la figure 2, il est possible de changer l'organe de frottement 19 sans démonter les moyens de verrouillage 16. Il suffit d'écarter les bras 25 de l'organe de support 23, avec un outil approprié, puis de faire pivoter l'organe de support 23 autour de l'axe de pivotement 18. L'axe de l'organe de frottement 19 est alors sensiblement parallèle à la bande de roulement 2a, et accessible manuellement. On peut également retirer l'organe de support 23 en exerçant sur lui une force dans le sens de la flêche B (voir figure 2).

Le remontage de l'ensemble se fait dans l'ordre inverse des opérations précédentes.

## Revendications

1. Roulette pivotante du type comportant une roue (2) dont le pivotement autour d'un axe vertical (3) est susceptible d'être bloqué ou débloqué par la rotation de celle-ci dans un sens ou dans l'autre, un palier de support (8) présentant au moins une cuvette annulaire (9) qui, par sa partie centrale, est fixée rigidement sur l'extrémité inférieure de l'axe vertical de pivotement (3), une chape de support (6) présentant au moins une joue latérale (5) dont l'extrémité inférieure porte l'axe horizontal (4) de la roue (2) et présentant également une calotte annulaire (7) supérieure disposée autour de l'extrémité inférieure de l'axe vertical de pivotement (3), raccordée à l'extrémité supérieure de ladite joue (5) et coopérant avec les organes de roulement dudit palier (8), et des moyens de verrouillage (16) de la chape (6) par rapport à l'axe vertical de pivotement (3),
lesdits moyens de verrouillage (16) comprenant :
un double levier de commande (17) disposé dans l'espace compris entre le palier de support (8) et la bande de roulement (2a) de la roue (2) et articulé sur la chape (6) à l'aide d'un axe horizontal (18), parallèle à l'axe (4) de la roue (2),
un organe de frottement (19) monté à l'extrémité inférieure dudit levier de commande (17) et appliqué en permanence élastiquement contre la bande de roulement (2a) de ladite roue (2), ledit organe de frottement (19) étant susceptible de provoquer le pivotement dudit levier de commande (17) vers l'une de ses positions extrêmes dans l'une desquelles la chape de support (6) est immobilisée en rotation par rapport à l'axe vertical de pivotement (3) et dans l'autre desquelles ladite chape (6) est libre en rotation par rapport audit axe vertical (3),
un premier organe de verrouillage (21) solidaire de l'extrémité supérieure dudit levier de commande (17),
un deuxième organe de verrouillage (20) susceptible de coopérer avec ledit premier organe de verrouillage (21) en vue d'immobiliser la chape de support sur son axe vertical de pivotement,
ladite roulette (1) étant caractérisée en ce que l'organe de frottement (19) est réalisé dans un materiau resistant à l'abrasion due aux saletés accumulées sur la bande de roulement (2a) et que le double levier de commande (17) comporte un étrier (22) articulé sur l'axe de pivotement (18) dudit levier de commande (17) et un organe de support (23), sur lequel l'organe de frottement (19) est monté, ledit organe de support (23) étant fixé sur ledit axe de pivotement (18) par des premiers moyens de fixation (26) qui permettent son pivotement autour dudit axe (18) et étant fixé sur ledit étrier (22) par des deuxièmes moyens de fixation (28).

2. Roulette selon la revendication 1, caractérisée en ce que l'organe de support (23) est réalisé en un matériau élastique et en ce que les premiers moyens de fixation comportent une rainure (26) ménagée dans la paroi supérieure dudit organe de support (23) et dans laquelle loge l'axe de pivotement (18) du double levier de commande (17).

3. Roulette selon la revendication 2, caractérisée en ce que ladite rainure (26) débouche sur la face supérieure dudit organe de support (23) par une ouverture ayant une largeur inférieure au diamètre de l'axe de pivotement (18) du double levier de commande (17).

4. Roulette selon l'une quelconque des revendications 1 à 3, caractérisée en ce que l'étrier (22) présente une plaquette de verrouillage (24) qui s'étend vers la bande de roulement (2a) de la roue (2) et en ce que les deuxièmes moyens de fixation comportent au moins un crochet (28) solidaire de l'organe de support (23) et coopérant avec ladite plaquette de verrouillage (24).

5. Roulette selon l'une quelconque des revendications 1 à 4, caractérisée en ce que la calotte annulaire (7) comporte une encoche (20a) dans laquelle se déplace l'extrémité supérieure du levier de commande (17) en cas de pivotement de ce dernier.

## Claims

1. Swivel castor of the type comprising a wheel (2) of which the pivoting about a vertical shaft (3) is capable of being blocked or unblocked by rotation thereof in one direction or the other, a support bearing (8) having at least one annular dish (9) which, by its central portion, is fixed rigidly to the lower end of the vertical pivot shaft (3), a support dome (6) having at least one side piece (5) of which the lower end carries the horizontal shaft (4) of the wheel (2) and also having an annular upper cap (7) arranged around the lower end of the vertical pivot shaft (3), connected to the upper end of said side piece (5) and cooperating with the rolling elements of said bearing (8), and means (16) for locking the dome (6) relative to the vertical pivot shaft (3), said locking means (16) including:
- a double control lever (17) arranged in the space between the support bearing (8) and the tread (2a) of the wheel (2) and hinged to the dome (6) with the aid of a horizontal shaft (18) parallel to the shaft (4) of the wheel (2),
- a friction member (19) mounted at the lower end of said control lever (17) and permanently elastically applied to the tread (2a) of said wheel (2), said friction member (19) being capable of causing pivoting of said control lever (17) towards one of its end positions in one of which the support dome (6) is locked in rotation relative to the vertical pivot shaft (3) and in the other of which said dome (6) is free to rotate relative to said vertical shaft (3),
- a first locking member (21) rigidly connected to the upper end of said control lever (17),
- a second locking member (20) capable of cooperating with said first locking member (21) for the purpose of locking the support dome on its vertical pivot shaft,
said castor (1) being characterised in that the friction member (19) is made of a material resistant to the abrasion due to dirt accumulating on the tread (2a) and in that the double control lever (17) comprises a U-shaped member (22) hinged to the pivot shaft (18) of said control lever (17) and a support member (23) on which the friction member (19) is mounted, said support member (23) being fixed to said pivot shaft (18) by first fixing means (26) which allow pivoting thereof about said shaft (18) and being fixed to said U-shaped member (22) by second fixing means (28).

2. Castor according to claim 1, characterised in that the support member (23) is made of an elastic material and in that the first fixing means comprise a groove (26) which is formed in the upper wall of said support member (23) and in which is accommodated the pivot shaft (18) of the double control lever (17).

3. Castor according to claim 2, characterised in that said groove (26) opens out on the upper face of said support member (23) by an opening having a width less than the diameter of the pivot shaft (18) of the double control lever (17).

4. Castor according to any of claims 1 to 3, characterised in that the U-shaped member (22) has a locking plate (24) which extends towards the tread (2a) of the wheel (2) and in that the second fixing means comprise at least one hook (28) rigidly connected to the support member (23) and cooperating with said locking plate (24).

5. Castor according to any of claims 1 to 4, characterised in that the annular cap (7) comprises a notch (20a) in which is displaced the upper end of the control lever (17) in case of pivoting of the latter.

## Patentansprüche

1. Lenkrolle von der Art, die ein Rad (2), dessen Schwenken um eine vertikale Achse (3) durch Rotation von diesem in die eine oder andere Richtung blockiert oder gelöst werden kann, ein Stützlager (8), das wenigstens eine ringförmige Schale (9), welche in ihrem zentralen Teil fest an dem unteren Ende der vertikalen Schwenkachse (3) befestigt ist, eine Stützabdeckung (6), die wenigstens ein Seitenstuck (5) beinhaltet, dessen unteres Ende die horizontale Achse (4) des Rads (2) trägt und auch eine obere ringförmige Kappe (7) aufweist, die um das untere Ende der vertikalen Schwenkachse (3) angeordnet ist, mit dem oberen Ende des Stücks (5) verbunden ist und mit den Rollelementen des Lagers (8) zusammenwirkt, und Mittel (16) zum Verriegeln der Abdeckung (6) bezüglich der vertikalen Schwenkachse (3) aufweist,
wobei die Mittel (16) zum Verriegeln beinhalten:
einen Doppel-Betätigungshebel (17), der in dem Raum zwischen dem Stützlager (8) und der Lauffläche (2a) des Rads (2) liegt und an der Abdeckung (6) mittels einer parallel zur der Achse (4) des Rads (2) liegenden horizontalen Achse (18) angelenkt ist.
ein Reibungselement (19), das am unteren Ende des Betätigungshebels (17) befestigt ist und ständig elastisch gegen die Lauffläche (2a) des Rads (2) drückt, wobei das Reibungselement (19) das Schwenken des Betätigungshebels (17) in Richtung einer seiner Extremstellungen bewirken kann, wobei in einer von diesen die Stützabdeckung (6) bezüglich Rotation hinsichtlich der vertikalen Schwenkachse (3) unbeweglich ist und in der anderen die Abdeckung (6) bezüglich der vertikalen Achse (3) frei drehen kann,
ein erstes Verriegelungselement (21), das mit dem oberen Ende des Betätigungshebels (17) verbunden ist,
ein zweites Verriegelungselement (20), das mit dem ersten Verriegelungselement (21) zusammenwirken kann, um die Stützabdeckung an ihrer vertikalen Schwenkachse unbeweglich zu machen,
wobei die Rolle (1) dadurch gekennzeichnet ist, daß das Reibungselement (19) aus einem Material hergestellt ist, das gegen Verschleiß, aufgrund der auf der Lauffläche (2a) angesammelten Verunreinigungen, beständig ist, und daß der Doppel-Betätigungshebel (17) einen Bügel (22), der an der Schwenkachse (18) des Betätigungshebels (17) schwenkbar gelagert ist, und ein Stützelement (23), an dem das Reibungselement (19) befestigt ist, aufweist, wobei das Stützelement (23) an der Schwenkachse (18) durch erste Befestigungsmittel (26) befestigt ist, die dessen Schwenken um die Achse (18) ermöglichen und an dem Bügel (22) durch zweite Befestigungsmittel (28) befestigt sind.

2. Rolle nach Anspruch 1, dadurch gekennzeichnet, daß das Stützelement (23) aus einem elastischen Material hergestellt ist, und daß die ersten Befestigungsmittel eine Rille (26) aufweisen, die in der oberen Wand des Stützelements (23) ausgespart ist und in der die Schwenkachse (18) des Doppel-Betätigungshebels (17) liegt.

3. Rolle nach Anspruch 2, dadurch gekennzeichnet, daß die Rille (26) an der Oberseite des Stützelements (23) in einer Öffnung endet, die in der Breite kleiner als der Durchmesser der Schwenkachse (18) des Doppel-Betätigungshebels (17) ist.

4. Rolle nach einem der Ansprüche 1 bis 3, dadurch gekennzeichnet, daß der Bügel (22) eine Verriegelungsplatte (24) aufweist, die sich zu der Lauffläche (2a) des Rads (2) erstreckt, und daß die zweiten Befestigungsmittel wenigstens einen Haken (28) aufweisen, der mit dem Stützelement (23) verbunden ist und mit der Verriegelungsplatte (24) zusammenwirkt.

5. Rolle nach einem der Ansprüche 1 bis 4, dadurch gekennzeichnet, daß die ringförmige Kappe (7) eine Vertiefung (20a) aufweist, in der sich das obere Ende des Betätigungshebels (17) im Falle des Schwenkens von letzterem bewegt.
